Europäisches Patentamt

European Patent Office

Office européen des brevets

(19)

(11) Veröffentlichungsnummer: **0 099 982**
**B1**

(12) **EUROPÄISCHE PATENTSCHRIFT**

(45) Veröffentlichungstag der Patentschrift:
02.09.87

(21) Anmeldenummer: 83105756.7

(22) Anmeldetag: 11.06.83

(51) Int. Cl.⁴: **F 24 H 7/02,** F 24 J 3/00,
A 01 G 9/24

(54) **Niedertemperaturwärmespeicher, insbesondere für Gewächshäuser.**

(30) Priorität: 24.07.82 DE 3227718

(43) Veröffentlichungstag der Anmeldung:
08.02.84 Patentblatt 84/6

(45) Bekanntmachung des Hinweises auf die Patenterteilung:
02.09.87 Patentblatt 87/36

(84) Benannte Vertragsstaaten:
BE FR GB IT NL SE

(56) Entgegenhaltungen:
EP-A-0 041 161
EP-A-0 044 998
EP-A-0 048 831
DE-A-2 903 925
FR-A-2 407 434
US-A-4 287 942

(73) Patentinhaber: ERNO Raumfahrttechnik
Gesellschaft mit beschränkter Haftung,
Hünefeldstrasse 1-5, D-2800 Bremen (DE)

(72) Erfinder: Seefeldt, Dieter, Claus- Bartels- Strasse 7,
D-2800 Bremen (DE)
Erfinder: Klose, Horst, Dipl.- Ing., Stettiner
Strasse 5, D-2860 Osterholz- Scharmbeck (DE)

EP 0 099 982 B1

## Beschreibung

Die Erfindung betrifft eine Gewächshausheizung mit einem Niedertemperaturwärmespeicher, der aus mindestens einem Latentwärmemittel gefüllten Wärmeschlauch besteht.

Eine Heizung, die einen Wärmespeicher dieser Art verwendet, ist bekannt (FR-A-2 407 434), bei dem eine Vielzahl von spiralförmig aufgewickelten Schläuchen, die mit einem wärmespeicherndem Werkstoff gefüllt sind, zum Zwecke des Wärmeaustausches von einem wärmeübertragenden flüssigen Medium umströmt werden. Die spiralförmig aufgewickelten Wärmeschläuche sind dort so eng aneinander gewickelt, daß sich die einzelnen Wärmeschlauchwindungen gegenseitig berühren. Dadurch und in Verbindung mit metallischen Auflageflächen, auf der die bekannten spiralförmig aufgewickelten Wärmeschläuche liegen, findet ein Wärmeaustausch zwischen dem wärmeübertragendem Wasser und den Wärmeschläuchen im wesentlichen nur auf dem Teil der Oberfläche der Wärmeschläuche statt, die der metallischen Auflagefläche gegenüberliegt. Die zum Wärmeaustausch mit dem wärmeübertragenden Wasser in Kontakt stehende Fläche des Wärmeaustausches wird beim bekannten Wärmespeicher im wesentlichen nur durch die einseitige Oberfläche des spiralförmig aufgedrehten Wärmeschlauches gebildet. Die Seitenbereiche der die Spirale bildenden Wärmeschläuche nehmen am Wärmeaustausch nur unvollständig oder gar nicht teil, da das wärmeübertragende Wasser diese Stelle zum Wärmeaustausch nur unvollständig erreicht.

Wenn der Temperaturgradient des wärmeübertragenden Mediums gering ist, ist der Nachteil dieses bekannten Wärmespeicher, daß dort allerhöchstens die Hälfte der zur Verfügung stehenden Wärmeaustauschoberfläche für den Wärmeaustausch zur Verfügung steht und die Temperatur bei Abkühlung auf die untere noch akzeptable Temperatur und bei Erwärmung auf die obere maximale Temperatur nur geringfügig um eine Bezugstemperatur (Raumwärme) schwankt, bzw. schwanken darf. Bei Heizungen, die Niedertemperaturwärmespeicher verwenden, ist es unabdingbares Gebot, daß der Wirkungsgrad des Speichers dann sehr hoch sein muß, wenn der Gradient des Mediums, das auf eine obere Temperatur erwärmt wird, und sich auf eine untere Tempertur abkühlt, gering ist und zur Wärmeaufnahme und Wärmeabgabe nur zeitlich eng begrenzte Perioden zur Verfügung stehen, d. h. die Wärmeaufnahme zur Zeit der Sonnenbestrahlung des Gewächshauses und die Wärmeabgabe zur Nachtzeit.

Darüber hinaus ist eine Vorrichtung zur Beheizung von Pflanzenkulturen bekannt (EP-A-0 41 161), bei der Schläuche mit Wasser oder einem anderem Wärmeträgermedium gefüllt sind, bei der allerdings der Wärmeübertragungsvorgang während der Erwärmungsphase durch den unmittelbaren Einfluß des Sonnenlichts auf die gefüllten Schläuche erfolgt. Dazu sind die dortigen Schläuche schwarz ausgebildet, so daß ein optimales Wärmeabsorbtionsvermögen gegeben ist und die kurzwellige Sonneneinstrahlung deshalb dort unmittelbar nach ihrem Auftritt auf den Folienschlauch in langwellige Wärmestrahlung umgewandelt wird, die auf den Schlauchinhalt, der den Wärmespeicher darstellt, zum Zwecke seiner Erwärmung abgegeben wird. Sowohl der dortige Wärmespeicher als auch dort zum Tragen kommende Erwärmungsmechanismus des Speichers sind gattungsmäßig von der eingangs genannten Heizung für Gewächshäuser mit Niedertemperaturspeicher verschieden.

Schließlich ist eine Wärmespeichervorrichtung bekannt (US-A-4 287 942), die Wärme in einem geeigneten Absorber außerhalb des abgegrenzten, zu beheizenden Volumens aufnimmt und sie dem zu beheizenden Volumen, in dem sich ein Wärmespeicher befindet, zuführt, wobei die durch den gesonderten Absorber abgenommene Wärme über ein Medium dem Wärmespeicher zugeführt wird. Das bedeutet, daß bei dieser bekannten Vorrichtung das Wärmetransportmedium nicht unmittelbar durch Sonneneinwirkung erwärmt, vielmehr durch die Luft unter Zwischenschaltung eines gesonderten Energieabsorbers aufgeheizt wird. Ist jedoch kein gesonderter Energieabsorber vorhanden, kann die bekannte Vorrichtung bestimmungsgemäß nicht arbeiten.

Es ist Aufgabe der vorliegenden Erfindung eine Heizung für Gewächshäuser mit einem Niedertemperaturspeicher zu schaffen, der im Niedertemperaturbereich neben einer großen Wärmekapazität und einem großem Wirkungsgrad eine große Wärmeaufnahme - und Wärmeabnahmefähigkeit besitzt und nur geringfügig über einer Nenntemperatur erwärmtes gasförmiges Medium als primärer Wärmeträger in einem Gewächshaus vorhanden und zum Zwecke der Wärmeübertragung einsetzbar ist.

Gelöst wird die Aufgabe gemäß der Erfindung dadurch, daß der Wärmeschlauch in Windungen in Verbindung mit einem Gebläse derart angeordnet ist, daß bei Betrieb des Gebläses Gewächshausluft über die Windungen zirkuliert.

Weitere Ausgestaltungen der Erfindung sind durch die Merkmale der abhängigen Ansprüche 2 bis 4 gekennzeichnet.

Anhand von Beispielen wird die Erfindung näher erläutert:

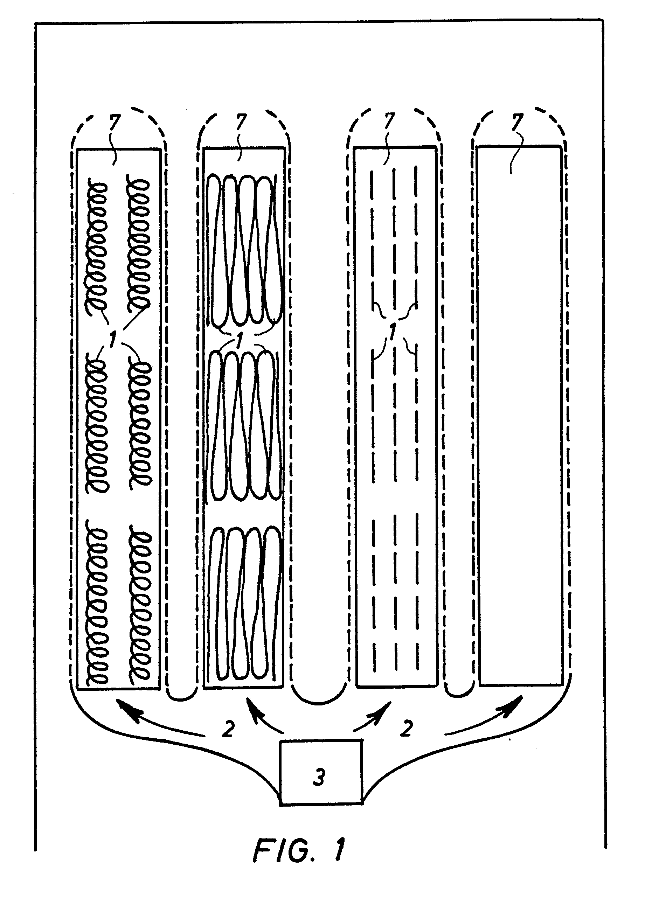

Fig. 1 zeigt die Arbeitstische mit den Wärmespeichereinheiten und dem Gebläse

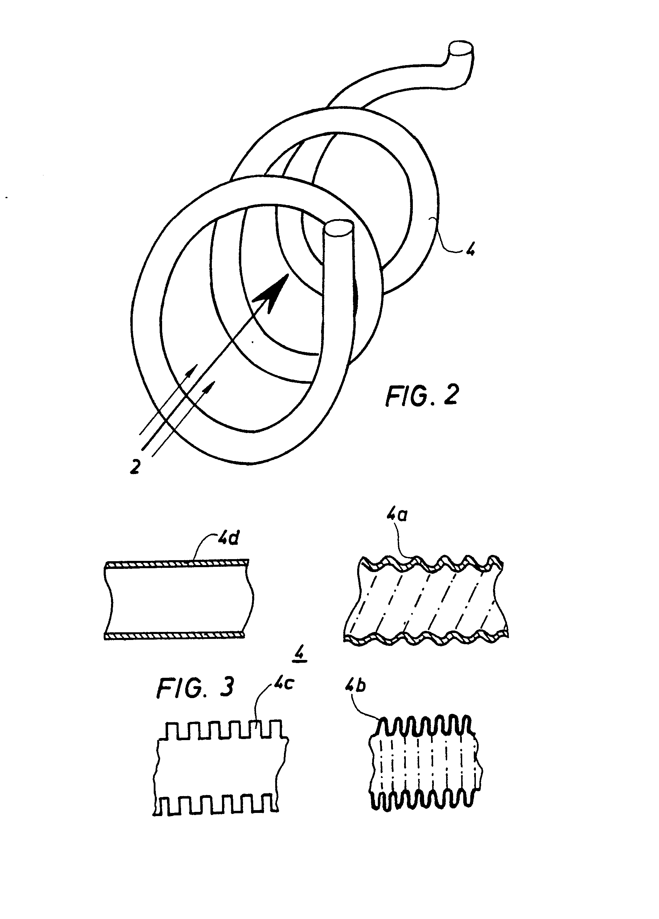

Fig. 2 zeigt eine Wärmeschlaucheinheit

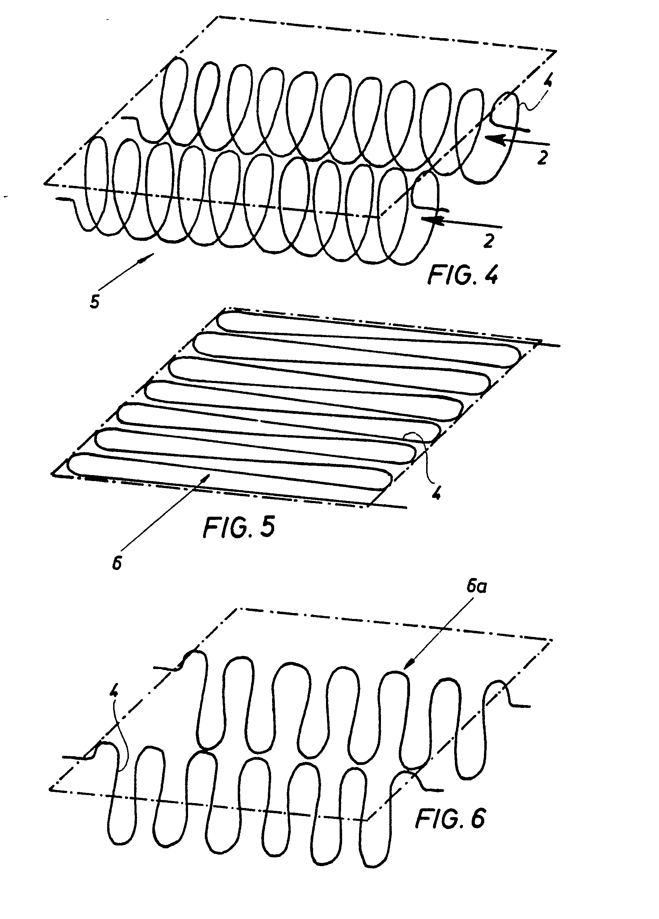

Fig. 3 zeigt die verschiedenen Schlauchausführungen

Fig. 4 zeigt die spiralförmige Wärmeschlauchanordnung

Fig. 5 zeigt die mäanderförmige horizontale Wärmeschlauchanordnung und

Fig. 6 zeigt die mäanderförmige vertikale Wärmeschlauchanordnung

Die Latentwärmespeicher arbeiten wie folgt:

Die Aufheizung dieser Wärmespeicher 1 erfolgt durch die Umgebungsluft, die durch Sonneneinwirkung erwärmt ist, d.h. daß der erwärmte Luftstrom 2 durch den Speicher 1 geleitet wird - mit Hilfe eines Gebläses 3. Das Material, das zur Latentwärmeerzeugung benutzt wird, hat einen Schmelzpunkt, der im Bereich zwischen ca. 18 bis 21° Celsius liegt. Vorzugsweise wird Fettsäure oder Kohlenwasserstoff benutzt. Als Träger des Materials dient ein Schlauch 4, der ein Wendelschlauch 4 a, Folienschlauch 4 b, gerippter Schlauch 4 c oder auch ein normal glatter Schlauch 4 d sein kann. Die Formgebung des Schlauches 4 ist zweckmäßig spiralförmig 5 oder mäanderförmig 6, wobei bei mäanderförmigen Anordnungen auch mehre Lagen übereinander liegen können. Der Querschnitt des Schlauches wird zweckmäßig klein gehalten, so daß auch bei der Wärmeabgabe das Materials voll bis zur Mitte hin genutzt werden kann. Die Materialien, die zweckmäßig zur Latentwärmespeicherung benutzt werden, verändern ihren Aggregatzustand von festem Zustand in den flüssigen und umgekehrt. Selbstverständlich geht das auch mit Materialien, die vom flüssigen Zustand in den Dampfzustand übergehen, jedoch benötigen solche Materialien z. Zt. noch erheblich höhere Energiemengen. Die erfindungsgemäß vorgeschlagenen Materialien sind ausschließlich auf der Basis Fest- und Flüssigkeitszustand ausgelegt, so daß ein relativ kleiner Querschnitt des Schlauches vorgegeben ist, um zu vermeiden, daß das Material bei Wärmeabgabe an den Wandungen erstarrt und damit einen Isolator zur Mitte hin bildet. Ein kleiner Querschnitt des Schlauches bedingt jedoch, daß viele Windungen anzuordnen sind. Dementsprechend wird die Zahl der Windungen und der Durchmesser der Windungen auszulegen sein. Die Menge des zur Verfügung zu stellenden Latentwärmematerials ist abhängig von der Quadratmeterfläche des zu beheizenden Gewächshauses. Die Erfahrung hat gelehrt, daß ca. 30 Kg pro Quadratmeter Fläche ausreichend sind. Die Kapazität des Materials beträgt ca. 40 Kalorien pro Kubikzentimeter.

Die normale Schlauchlänge wird 100 Meter betragen - sind mehrere Einheiten erforderlich, werden sie parallel oder in Reihe aufgestellt. Der Spiraldurchmesser des 100 Meter langen Schlauches wird entsprechend seiner Unterbringungsmöglichkeit gewählt, so daß ein 100 Meter langer Schlauch gewendelt, ca. 25 bis 30 Meter Länge als Einheit einnimmt. Es hat sich als besonders vorteilhaft erwiesen, die Schlauchkonfiguration als gewellten Schlauch zu benutzen, da hier ein optimaler Latentwärmeaustausch gegeben ist. Der Einsatz solcher Speicher wird im wesentlichen für den Kurzzeitbetrieb gesehen, bei dem die Überschußwärme eines Gewächshauses - ca. 330 Wattstunden pro Quadratmeter und mit einem Temperaturprofil von ca 25° Celsius - für die Beheizung während kühlerer Tagesphasen genutzt wird.

Während der Aufladung wird mit Hilfe eines Gebläses die Umgebungsluft durch den Latentwärmespeicher geführt. Dabei erfolgt im Latentwärmespeicher eine Umwandlung des festen Materials in flüssiges, und zur Wärmeabgabe wird mit Hilfe des gleichen Gebläses die in dem Latentwärmespeicher gestaute Energiemenge wieder der Umgebungsluft zugeführt, und es erfolgt wiederum eine Umwandlung des flüssigen Materials in den festen Zustand.

1 Wärmespeicher
2 Luftstrom
3 Gebläse
4 Schlauch
5 Spiralförmige Anordnung
6 mäanderförmige Anordnung
7 Arbeitstisch

**Patentansprüche**

1. Gewächshausheizung mit einem Niedertemperaturwärmespeicher, der aus mindestens einem mit einem Latentwärmemittel gefüllten Wärmeschlauch (4) besteht, dadurch gekennzeichnet, daß der Wärmeschlauch (4) in Windungen in Verbindung mit einem Gebläse (3) derart angeordnet ist, daß bei Betrieb des Gebläses Gewächshausluft über die Windungen zirkuliert.

2. Gewächshausheizung mit einem Niedertemperaturwärmespeicher nach Anspruch 1, dadurch gekennzeichnet, daß der Wärmeschlauch (4) mäanderförmig (6) angeordnet ist.

3. Gewächshausheizung mit einem Niedertemperaturwärmespeicher nach Anspruch 1 oder 2, dadurch gekennzeichnet, daß die Wärmeschläuche (4) zu Montageeinheiten zusammengefaßt sind.

4. Gewächshausheizung mit einem Niedertemperaturwärmespeicher nach Anspruch 3, dadurch gekennzeichnet, daß die Montageeinheiten unter Arbeitstischen (7) montierbar sind.

**Claims**

1. A greenhouse heater with a low temperature heat store which comprises at least one heat tube (4) filled with a latent heat medium, wherein the heat tube (4) is arranged in windings and is associated with a fan (3) so that when the fan is on the greenhouse air circulates over the windings.

2. A greenhouse heater with a low temperature heat store according to claim 1, wherein the heat tube (4) is arranged in a meander pattern.

3. A greenhouse heater with a low temperature heat store according to claim 1 or 2, wherein the heat tubes (4) are combined in mounting units.

4. A greenhouse heater with a low temperature heat store according to claim 3, wherein the mounting units are mountable below worktables.

**Revendications**

1. Chauffage de serre avec un accumulateur thermique à basse température, qui est constitué d'au moins un tuyau souple de chauffage (4) rempli d'un produit à chaleur latente, chauffage caractérisé en ce que le tuyau souple de chauffage (4) est disposé selon des spires en liaison avec une soufflante (3), et en ce que, lors du fonctionnement de la soufflante, de l'air de la serre circule sur les spires.

2. Chauffage de serre avec un accumulateur thermique à basse température, selon la revendication 1, caractérisé en ce que le tuyau souple (4) est disposé sous forme de méandres (6).

3. Chauffage de serre avec un accumulateur thermique à basse température, selon la revendication 1 ou 2, caractérisé en ce que les tuyaux souples de chauffage (4) sont rassemblés pour constituer des unités de montage.

4. Chauffage de serre avec un accumulateur thermique à basse température, selon la revendication 3, caractérisé en ce que les unités de montage sont susceptibles d'être montées sous des tables de travail (7).

*FIG. 1*

FIG. 2

2

4d

4a

4

FIG. 3

4c

4b

FIG. 4

FIG. 5

FIG. 6